(19) Europäisches Patentamt European Patent Office Office européen des brevets

(11) **EP 1 749 851 B1**

(12) **FASCICULE DE BREVET EUROPEEN**

(45) Date de publication et mention
de la délivrance du brevet:
**02.01.2013   Bulletin 2013/01**

(51) Int Cl.:
*C08J 3/05* (2006.01)          *C08L 53/02* (2006.01)
*C08J 3/24* (2006.01)

(21) Numéro de dépôt: **06291155.7**

(22) Date de dépôt: **17.07.2006**

(54) **Composition comprenant au moins deux polymères thermoplastiques incompatibles et un agent compatibilisant, son procédé de préparation et son utilisation**

Zusammensetzung enthaltend mindestens zwei unverträgliche thermoplastische Polymere und ein Kompatibilisierungsmittel, Verfahren zu ihrer Herstellung und deren Verwendung

Composition comprising at least two incompatible thermoplastic polymers and a compatibilising agent, process for its preparation and its use

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **05.08.2005   FR 0508373**

(43) Date de publication de la demande:
**07.02.2007   Bulletin 2007/06**

(73) Titulaire: **HUTCHINSON**
**75008 Paris (FR)**

(72) Inventeurs:
• **Garois, Nicolas**
**45200 Amilly (FR)**

• **Sonntag, Philippe**
**77850 Hericy (FR)**
• **Bouchereau, Logan**
**45700 Chevillon sur Huillard (FR)**

(74) Mandataire: **Bolinches, Michel Jean-Marie et al**
**Cabinet Orès**
**36, rue de St Pétersbourg**
**75008 Paris (FR)**

(56) Documents cités:
**EP-A- 0 493 811     EP-A- 1 152 034**
**FR-A- 2 820 138     FR-A- 2 849 855**
**US-B1- 6 207 752     US-B1- 6 579 944**

**Description**

La présente invention concerne une composition comprenant au moins deux polymères thermoplastiques incompatibles et au moins un agent compatibilisant, un procédé de préparation de cette composition et une utilisation de ladite composition pour la fabrication d'articles ou de semi-finis thermoplastiques présentant notamment des propriétés mécaniques améliorées.

D'une manière générale, les compositions ou mélanges de polymères répondent au besoin de disposer d'un ensemble de propriétés qui seraient difficiles ou impossibles à obtenir avec un polymère unique. Il s'agit le plus souvent de propriétés spécifiques, comme la résistance aux solvants, la résistance aux chocs, la rigidité, la ductilité, les propriétés de type « barrière », la résistance à l'abrasion, la résistance au feu, le caractère brillant, etc. Les mélanges de polymères peuvent également répondre au besoin de procurer un coût de fabrication réduit, en ayant recours à l'ajout d'un polymère de bas coût jouant un rôle de diluant, et de procurer une aptitude à la mise en oeuvre et/ou une recyclabilité améliorées.

Ces compositions de polymères sont limitées par le fait qu'elles incluent des polymères généralement immiscibles - typiquement polaire et apolaire - et nécessitent de ce fait l'incorporation d'un agent compatibilisant (on pourra se reporter à l'ouvrage de Krause S.M. Compatible Polymers in Polymer Handbook Brandrup J. and Immergut, E.H., Eds, 3rd Edition, Wiley, New York ,1989). Cette compatibilisation est prévue pour améliorer les propriétés de la composition par une réduction de la tension interfaciale, ainsi que par une amélioration de l'adhésion entre les phases.

Différentes techniques de compatibilisation sont utilisées à ce jour dans les compositions de polymères immiscibles :

- l'ajout d'une quantité réduite (selon une fraction massique allant typiquement de 0,5 % à 1 %) d'un co-solvant compatible avec les deux polymères,
- l'ajout, selon une fraction massique sensiblement comprise entre 1 % et 20 %, d'un copolymère de type diblocs ou triblocs ayant deux blocs respectivement compatibles avec les deux polymères, un copolymère triblocs améliorant les propriétés mécaniques de la composition de façon plus notable qu'un copolymère diblocs ;
- l'ajout d'un agent polymérique modifiant préalablement réticulé de type « core-shell » ou coeur-enveloppe (e.g. de type éthylène/acrylate/anhydride maléique ou glycidyl méthacrylate/éthylène/vinyl acétate) selon une fraction massique plus élevée - comprise usuellement entre 20 % et 35 % -, les agents de type « core-shell » étant indiqués dans le cas de mélanges cassants afin d'augmenter la résistance à l'impact ;
- la génération *in situ* d'un agent compatibilisant, selon la technique connue sous le nom de compatibilisation réactive, qui génère une interphase de grandes dimensions et qui permet de conserver les propriétés mécaniques des mélanges lors de procédés de transformation particulièrement exigeants comme l'injection (pression et cisaillement élevés).

Le document de Brevet US-B-6 887 940 divulgue quant à lui, dans une composition comprenant des polymères polaire et apolaire respectivement constitués d'un polyamide et d'une polyoléfine, l'utilisation d'un agent compatibilisant constitué d'une polyoléfine comportant des groupes acide carboxylique formés par oxydation préalable.

Les avantages de ces techniques sont bien connus et recensés dans la littérature, comme par exemple dans l'article de Ajji A. Utracki L. A., Polym. Eng. Sci. 36, 1574 (1996).

Ces techniques permettent d'abaisser la tension interfaciale dans les mélanges de polymères, cependant elles présentent l'inconvénient majeur de ne pas conférer à la composition obtenue, d'une part, une cohésion et des propriétés mécaniques satisfaisantes et, d'autre part, une morphologie stable après mise en oeuvre de la composition, par exemple suite à un moulage par injection ou à une extrusion de celle-ci.

Un autre inconvénient de ces techniques, telles que celles consistant en l'ajout d'un agent polymérique modifiant de type « core-shell » ou en la compatibilisation réactive, réside dans la complexité de leur mise en oeuvre.

Le document EP-A-493 811 enseigne de mélanger, à chaud et en présence d'un agent inducteur de radicaux carbone, un ou plusieurs polymères thermoplastiques éventuellement additionnés d'un agent compatibilisant polymérique et un élastomère modifié par un acide carboxylique, pour l'obtention d'une composition selon le préambule de la revendication 1 annexée à la présente description. Cette composition présente une résistance aux chocs améliorée, étant précisé que cet acide permet d'améliorer la compatibilité de l'élastomère avec le(s) polymère(s) thermoplastique(s).

Le document FR-A-2 849 855 enseigne d'ajouter à un polyamide un polymère à blocs ayant un bloc PMMA, tel qu'un « SBM » (terpolymère à blocs styrène-butadiène-polyméthacrylate de méthyle), pour l'obtention d'une composition thermoplastique présentant une résistance aux chocs améliorée, étant précisé que cette composition peut être associée à un alliage de deux polymères polyamide/ polyoléfine. Ce document ne mentionne pas l'utilisation d'un système de réticulation lors du mélangeage de la composition, ni lors de l'obtention de cet alliage.

Le document FR-A-2 820 138 enseigne d'ajouter à un polymère du styrène un polymère à blocs ayant un bloc PMMA, tel qu'un diblocs polystyrène-PMMA, pour conférer des propriétés antistatiques à ce polymère du styrène. Ce document n'enseigne pas d'utiliser, en mélange avec deux polymères thermoplastiques polaire et apolaire, un agent compatibilisant polymérique à deux groupes d'unités polaires et apolaires respectivement compatibles avec ces deux polymères, ni un système de réticulation.

Un but de la présente invention est de remédier à ces inconvénients, et ce but est atteint en ce que la Demanderesse vient de découvrir d'une manière inattendue que, si l'on soumet à une réaction de mélangeage à chaud, en présence d'un système de réticulation approprié, au moins deux polymères thermoplastiques incompatibles particuliers qui sont respectivement polaire et apolaire et, selon une fraction massique déterminée, au moins un agent compatibilisant polymérique et réticulable particulier qui comporte au moins deux groupes d'unités polaires et apolaires respectivement compatibles avec les polymères, de telle sorte que le produit de cette réaction comprenne ces polymères non réticulés et l'agent compatibilisant qui est au contraire réticulé et qui forme une interphase entre ces deux polymères thermoplastiques,

alors on obtient une composition présentant notamment :

- un allongement à la rupture nettement amélioré par rapport à celui du mélange brut de ces mêmes polymères dépourvu d'agent compatibilisant,
- un module élastique analogue ou supérieur à celui de ce mélange brut de polymères, et
- des propriétés de déformation « seuil », comprenant notamment la contrainte au seuil d'écoulement, qui sont analogues à celles conférées à ces mêmes polymères par le même agent compatibilisant se trouvant à l'état non réticulé dans la composition.

Une composition selon l'invention est telle que :

- parmi ces deux polymères thermoplastiques particuliers, l'un, apolaire, est une polyoléfine et l'autre, polaire, est choisi dans le groupe constitué par les polyacétates de vinyle, les polyacryliques, les homopolymères et copolymères d'esters de type aliphatique, les homopolymères et copolymères d'amides de type aliphatique, les polyoxyméthylènes, les polymères fluorés, les polycarbonates, les polyimides, les polyétherimides et les polyéthers blocs amide ;
- ce système de réticulation approprié est choisi dans le groupe constitué par ceux comprenant un peroxyde organique, une résine phénolique, un oxyde métallique et une diamine ; et que
- cet agent compatibilisant particulier, qui est le seul réticulé dans la composition, y est présent selon une fraction massique comprise entre 1 % et 25 % et est choisi dans le groupe constitué par les terpolymères linéaires à trois blocs polystyrène / polybutadiène-1,4 / polyméthacrylate de méthyle et les terpolymères statistiques comprenant des unités issues de l'éthylène, d'un acrylate et d'acide acrylique.

On notera que la composition selon l'invention, qui comprend le produit de cette réaction de mélangeage de sorte que seul l'agent compatibilisant subisse une réticulation le faisant passer d'un état initial réticulable à un état final réticulé (du fait de sites qu'il comporte le rendant apte à la réticulation), permet de conférer à la composition ainsi obtenue une cohésion et, par conséquent, un ensemble de propriétés mécaniques et élastiques qui sont dans l'ensemble améliorées en comparaison de celles de l'état de la technique.

On notera également que cette réticulation de l'interphase entre les deux polymères lors du mélangeage - interphase constituée du seul agent compatibilisant - permet de conférer à la composition selon l'invention une morphologie dépourvue de coalescence qui est sensiblement maintenue même après transformation (e.g. après moulage par injection ou extrusion).

On notera en outre que l'existence de cette interphase réticulée améliore également la résistance de la composition selon l'invention aux solvants ainsi que sa recyclabilité, du fait de cette absence de coalescence.

De préférence, ledit système de réticulation comprend alors avantageusement au moins un peroxyde organique, un activateur et, optionnellement, du soufre.

Dans ce cas, ledit activateur est avantageusement choisi dans le groupe constitué par les diacrylates, les diméthacrylates, les triméthacrylates, le triallyl cyanurate, le triallyl isocyanurate et la N, N' phénylène dimaléimide.

Comme exposé ci-dessus, lesdits polymères thermoplastiques d'une composition selon l'invention comprennent avantageusement :

- un polymère polaire choisi dans le groupe constitué par les polyacétates de vinyle, les polyacryliques (tels que, à titre non limitatif, le polyméthacrylate de méthyle, les polyacrylonitriles, les copolymères styrène/acrylonitrile, les copolymères acrylonitrile/butadiène/styrène et les copolymères méthacrylate de méthyle/acrylonitrile/butadiène/styrène), les homo- et copolymères d'esters de type aliphatique (tels que, à titre non limitatif, le polyéthylène téréphtalate et le polybutylène téréphtalate), les homo- et copolymères d'amides de type aliphatique (tels que, à titre non limitatif, les polyamides PA 6.6, PA 6.10, PA 6.12, PA 4.6, PA 6, PA 11 et PA 12), les polyoxyméthylènes, les polymères fluorés (tels que, à titre non limitatif, le polytétrafluoroéthylène, le polychlorotrifluoroéthylène, le polyfluorure de vinylidène), les polycarbonates, les polyimides, les polyétherimides, les polyéthers blocs amide, et

- un polymère apolaire choisi parmi les polyoléfines telles que, à titre nullement limitatif, les polyéthylènes, les polypropylènes, les polyisobutylènes ou les polyméthylpentènes.

Encore plus avantageusement, ledit polymère polaire est choisi dans le groupe constitué par les homopolymères ou copolymères d'un amide aliphatique, les polyoxyméthylènes et les polyfluorures de vinylidène, et ledit polymère apolaire est un polyéthylène à haute densité ou un polypropylène.
Selon une autre caractéristique de l'invention, ladite composition comprend avantageusement :

- ledit polymère thermoplastique polaire selon une fraction massique comprise entre 1 % et 90 %,
- ledit polymère thermoplastique apolaire selon une fraction massique comprise entre 90 % et 1 %, et
- ledit système de réticulation selon une fraction massique comprise entre 0,01 % et 5 %.

Encore plus avantageusement, ladite composition comprend :

- ledit polymère thermoplastique polaire selon une fraction massique comprise entre 40 % et 60 %, et
- ledit polymère thermoplastique apolaire selon une fraction massique comprise entre 50 % et 30 %.

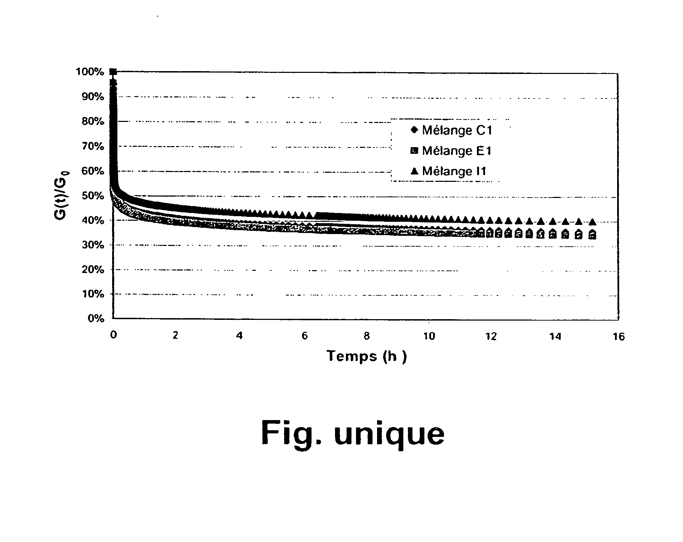

De préférence, la composition selon l'invention comprend ledit agent compatibilisant selon une fraction massique comprise entre 5 % et 15%.
On notera que les compositions conformes à l'invention peuvent comprendre également tout ou partie des autres ingrédients habituellement utilisés dans les semi-finis ou articles thermoplastiques auxquels elles sont destinées.
Le procédé selon l'invention pour la préparation d'une composition telle que définie ci-dessus comprend un malaxage thermomécanique, en présence du système de réticulation, de l'agent compatibilisant à l'état réticulable et de chacun desdits polymères thermoplastiques, de manière à réticuler seulement ledit agent compatibilisant au sein de ladite composition.
De préférence, on met en oeuvre ledit mélangeage dans un mélangeur à double vis avec une température de filière comprise entre 200° C et 220° C.
Selon l'invention, ladite composition est utilisée pour la fabrication d'articles ou semi-finis thermoplastiques présentant des propriétés mécaniques améliorées, lesquelles comprennent notamment l'allongement à la rupture, la contrainte au seuil d'écoulement et le module élastique.
Les caractéristiques précitées de la présente invention, ainsi que d'autres, seront mieux comprises à la lecture de la description suivante de plusieurs exemples de réalisation de l'invention, donnés à titre illustratif et non limitatif en relation avec le dessin joint, dans lequel :

la figure unique est un graphique montrant l'évolution au cours du temps des modules complexes respectifs de deux compositions « témoin » et d'une composition selon l'invention, pour l'évaluation du phénomène de fluage-relaxation.

- Dans les exemples qui suivent, les conditions de mélangeage pour chaque composition « témoin » et selon l'invention ont été les suivantes.
  On a utilisé un mélangeur de type « bi-vis co-rotative » de diamètre 35 mm, avec un rapport longueur sur diamètre de 40:1 (« ZK 35×40D », COLLIN). Le profil de la « bi-vis » était constitué principalement de transport avec des zones de mélangeages intercalées. La température de la filière était de 200° C dans l'exemple 1 et de 210° C dans les exemples 2 et 3. La vitesse des vis était de 200 tr/min.
  On a brassé et dosé tous les ingrédients à un débit de 20 kg/h (« K-SFS-24 », K-TRON) pour les introduire dans la « bi-vis ».
  On a extrudé les compositions sous forme de joncs de diamètre 1,6 mm et on les a refroidies sous l'eau puis coupées par une granulatrice en tête (« LWRG 50H », LEISTRITZ) à une vitesse de 1000 tr/min.

- On a fabriqué des éprouvettes de traction de type H1 par moulage par injection, à partir des granulés. A cet effet, on a utilisé une presse à injection plastique de 125 tonnes (Série « NT125 », SANDRETTO). Le profil de température de la vis d'injection était un gradient de température allant de 160° C à l'alimentation, pour arriver à 200° C en buse. La température du moule était de 50° C.

- Les propriétés des compositions « témoin » et selon l'invention ont été évaluées expérimentalement comme suit.

Caractérisation mécanique :

On a effectué des tests de traction sur les éprouvettes H1 avec un dynamomètre (série « 5544 », INSTRON) à une vitesse de 20 mm/min. La méthode utilisée permet de mesurer le module d'Young, la contrainte seuil, la déformation seuil, la contrainte à la rupture et l'allongement à la rupture.

Par « contrainte seuil », on entend de manière connue la limite ou charge d'écoulement (« yield stress » en anglais, parfois appelée limite apparente d'élasticité), qui est par définition la charge unitaire à partir de laquelle on observe le phénomène d'écoulement. Plus précisément, il s'agit de la limite supérieure d'écoulement ($R_{eH}$) qui est la valeur de la charge unitaire au moment où, pour la première fois, on observe effectivement une chute de l'effort.

- Caractérisation rhéologique :

Les tests ont été effectués sur une machine de dénomination « ARES » (« Advanced Rheometric Expansion System »). Cette machine permet de mesurer les angles de perte (tangentes delta). Un balayage en température de -100° C à 100° C (rampe de 10° C/min.) a été effectué pour chacune des compositions. Les éprouvettes ont été soumises à une déformation de 0,1 % à une fréquence de 2 rad/s.

- Tests de gonflement des compositions :

On a réalisé chacun de ces tests sur quatre échantillons de dimensions 25×25×2 mm. On a plongé les échantillons dans un solvant de test « FAMB ». Après 96 heures, on a retiré les échantillons du solvant, puis on les a essuyés pour les peser (masse $m_{initial}$) et les mesurer (volume $v_{initial}$). Après 24 heures de séchage sous hotte, on a de nouveau pesé les échantillons (masse $m_{final}$) et mesurés (volume $V_{final}$).

Le calcul du pourcentage de gonflement est le suivant :

$$\bullet \quad \% \text{ gonflement massique} = \frac{m_{final} - m_{initial}}{m_{initial}} \times 100$$

$$\bullet \quad \% \text{ gonflement volumique} = \frac{v_{final} - v_{initial}}{v_{initial}} \times 100$$

La formulation du solvant « FAMB » était la suivante :

| | |
|---|---|
| • Toluène | 422,5 mL |
| • Iso octane | 253,5 mL |
| • Diisobutylene | 126,75 mL |
| • Ethanol | 42,25 mL |
| • Méthanol | 150 mL |
| • Eau | 5 mL |
| Total | 1000 mL |

- Essais de fluage-relaxation (illustrés à la figure unique) :

On a réalisé des essais de fluage-relaxation (Déformation : 3 %, température : 140° C, durée : 16 h) sur des barreaux de longueur 39 mm découpés dans des éprouvettes de type H1. Les mesures ont été réalisées sur un rhéomètre à déformation imposée de type « ARES » (RHEOMETRICS SCIENTIFIC). Afin de pouvoir comparer les mélanges et de s'affranchir de la valeur du module complexe G, on a ensuite réalisé le calcul de $G(t)/G_0$, $G_0$ étant la valeur du module complexe maximum.

## EXEMPLES

### I/ Première série d'essais :

On a préparé de la manière précitée cinq compositions « témoin » A1, B1, C1, D1 et E1 et trois compositions selon l'invention I1, I1' et I1", dont les formulations respectives sont détaillées en fractions volumiques (V/V) au tableau 2 ci-après.

La composition A1 comprend uniquement un copolymère de polyoxyméthylène (« Hostaform C13021 », TICONA), à titre de polymère polaire, et la composition B1 comprend uniquement un homopolymère du propylène (« Moplen 2084 HEXP », BASELL), à titre de polymère apolaire.

La composition C1 comprend uniquement un mélange de ces deux polymères, la composition D1 comprend en outre un système de réticulation au peroxyde « DICUP 40 » comprenant en outre un activateur sous forme de poudre « ALCAN », et la composition E1 est dépourvue de système de réticulation mais comprend en outre un copolymère triblocs non réticulé « SBM 012 » (ARKEMA), à titre d'agent compatibilisant.

Chaque composition de l'invention I1, I1', I1" comprend, outre ce mélange de polymères, à la fois le système de réticulation utilisé dans la composition D1 et l'agent compatibilisant utilisé dans la composition E1, de sorte que seul ce copolymère « SBM 012 » soit réticulé lors du mélangeage.

Les températures de transition vitreuse Tg mesurées sur un rhéomètre de type « ARES II » sont données dans le tableau 1 ci-après pour les polymères et l'agent compatibilisant, chacun se trouvant à l'état pur.

Tableau 1 :

| Produits | Températures Tg (° C) |
|---|---|
| « Hostaform C13021 » | -65 / -8 |
| « Moplen 2084 HEXP » | -46 / +3 |
| « SBM 012 » | -76/+18 |

Ces valeurs correspondent à un balayage en température à une vitesse de 10° C/min. allant de -100° C à + 100° C pour une déformation de 0,1 % à une fréquence de 2 rad/s.

Les mesures des propriétés mécaniques des différentes compositions ont été effectuées sur des éprouvettes de type H1 injectées sur une presse « SANDRETTO ». Les pressions de « commutation » (i.e. juste avant le passage à la pression de maintien) ainsi que les mesures des propriétés mécaniques sont reportées dans le tableau 2 ci-après.

Tableau 2 :

| | A1 | B1 | C1 | D1 | E1 | I1 | I1' | I1" |
|---|---|---|---|---|---|---|---|---|
| Polyoxyméthylène « HOSTAFORM C13021 » | 100% | | 50% | 49,25% | 41,5% | 41% | 41% | 45% |
| Polypropylène « MOPLEN 2084 HEXP » | | 100% | 50% | 49,25% | 41,5% | 41% | 41% | 45% |
| Agent compatibilisant « SBM 012 » | | | | | 17% | 17% | 16% | 8% |
| Peroxyde « DICUP 40 » | | | | 1% | | 0,6% | 1,2% | 1,2% |
| Activateur poudre « ALCAN » | | | | 0,5% | | 0,3% | 0,6% | 0,6% |
| Pression à la commutation (bars) | | | 740 | 570 | 880 | 630 | | |
| Temps d'injection (s) | | | 0,57 | 0,61 | 0,56 | 0,57 | | |

(suite)

| | A1 | B1 | C1 | D1 | E1 | I1 | I1' | I1" |
|---|---|---|---|---|---|---|---|---|
| Valeurs de gonflement des compositions (%) | | | | 9 | 10 | 7 | 5 | 5 |
| Allongement rupture (%) | 60 | 170 | 12 | 2,9 | 40 | 22 | 3,1 | 2,3 |
| *Ecart-type* | *15* | *20* | *2* | *0, 2* | *5* | *2* | *0, 7* | *0, 6* |
| Contrainte seuil (MPa) | 52 | 20,2 | 32 | 26 | 33 | 32,5 | 23 | 22,3 |
| *Ecart-type* | *3* | *0,7* | *0,5* | *1* | *0,5* | *0,3* | *2* | *2* |
| Déformation seuil (%) | 4 | 3,4 | 4 | 2,8 | 13 | 10,1 | 3 | 2,3 |
| *Ecart-type* | *0,1* | *0,5* | *0,5* | *0, 2* | *0, 6* | *1* | *0, 6* | *0, 6* |
| Module élastique à 0,2 % de déformation (MPa) | 1900 | 850 | 1200 | 1200 | 870 | 1170 | 1500 | 1600 |

On notera que les valeurs de gonflement des trois compositions selon l'invention I1, I1' et I1" sont inférieures à celle des compositions « témoin » D1, E1, ce qui témoigne de la réticulation de l'agent compatibilisant « SBM 012 » au sein des compositions selon l'invention.

Des mesures de températures de transition Tg ont également été effectuées pour plusieurs de ces compositions en suivant le même protocole que pour les produits purs. Les résultats figurent dans le tableau 3.

Tableau 3 :

| Compositions | Températures de transition Tg (° C) |
|---|---|
| C1 | -67° C;-45° C; +3° C |
| D1 | -67° C;-45° C; +3° C |
| E1 | -65° C;-47° C; +3° C |
| I1 | -65° C;-47° C; -3° C |

La composition « témoin » C1 préparée sans agent compatibilisant présente des valeurs de module élastique et d'allongement rupture conformes à la loi des mélanges, comme le montre la comparaison avec les valeurs des produits purs (cf. tableau 3). Les valeurs des températures de transition Tg montrent qu'il n'y a aucune interaction entre les différents constituants de la composition C1, les températures restant similaires à celles des produits purs.

L'ajout du système de réticulation au peroxyde à cette composition C1, confère à la composition « témoin » D1 obtenue des propriétés dégradées, comme on peut le voir au tableau 2. Les valeurs de contrainte seuil et d'allongement rupture diminuent, alors que le module élastique n'est pas affecté, en comparaison des propriétés correspondantes de la composition C1. Cela montre que les deux phases polymériques polaire et apolaire ne sont pas réticulées par ce système de réticulation.

L'ajout au mélange de polymères de l'agent compatibilisant sans système de réticulation, qui conduit à la composition « témoin » E1, entraîne une meilleure interpénétration des phases comme le montrent les valeurs de températures Tg, l'écart entre les deux pics principaux diminuant de 4° C au mélange (cf. tableau 3). Du point de vue des propriétés mécaniques, la valeur du module élastique de la composition E1 est nettement plus réduite que celles des compositions non compatibilisées C1 et D1. Toutefois, les autres propriétés mécaniques, comme l'allongement à la rupture et la contrainte seuil, sont améliorées.

La première composition I1 de l'invention, qui est caractérisée par la réticulation du seul agent compatibilisant avec une quantité réduite de système de réticulation, combine les valeurs de module élastique élevées de la composition de base C1 aux propriétés de déformation seuil satisfaisantes de la composition « témoin » compatibilisée E1. L'effet est particulièrement notable pour la déformation seuil ainsi que pour l'allongement rupture, qui passe de 12 % pour la composition C1 à 22 % pour la composition I1.

Par ailleurs, il convient de noter que l'interpénétration des deux phases polymériques polaire et apolaire dans la composition I1 reste comparable à celle de la composition « témoin » compatibilisée E1, comme le montrent les valeurs des températures de transition Tg (cf. tableau 3).

L'augmentation de la quantité de système de réticulation permet d'obtenir des modules élastiques bien au-delà de ce que permet la loi des mélanges (cf. deuxième et troisième compositions selon l'invention I1' et I1"). La rigidification qui caractérise ces compositions I1' et I1" entraîne la disparition du seuil d'écoulement, le matériau perdant ses caractéristiques plastiques au profit d'un comportement élastique.

On a par ailleurs réalisé des essais de fluage-relaxation comme détaillé ci-dessus, sur trois barreaux respectivement constitués des trois compositions C1, E1 et I1. Comme le montre la figure unique qui présente les résultats obtenus en termes d'évolution temporelle du module complexe, il apparaît que la composition I1 de l'invention devient moins « ramollie » que les compositions « témoin » C1 et E1, en conservant un module supérieur à celui de ces dernières. Par conséquent, la composition I1 de l'invention est moins soumise au phénomène de fluage-relaxation que les compositions C1 et E1, à la température testée de 140° C (correspondant sensiblement à la température de ramollissement des polymères).

## II/ Seconde série d'essais :

On a préparé de la manière précitée trois compositions « témoin » C2, D2, E2 et une composition selon l'invention I2, dont les formulations respectives sont détaillées en parties en poids au tableau 4.

La composition C2 comprend un mélange d'un copolymère de polyamide et d'éthylène sensiblement de type PA11 (« RILSAN B », ATOFINA), à titre de polymère polaire, et de l'homopolymère du propylène « Moplen 2084 HEXP » (BASELL), à titre de polymère apolaire.

La composition D2 comprend en outre le système de réticulation au peroxyde « DICUP 40 » comprenant en outre l'activateur sous forme de poudre « ALCAN », et la composition E2 est dépourvue de système de réticulation mais comprend en outre le copolymère triblocs non réticulé « SBM 012 » (ARKEMA), à titre d'agent compatibilisant.

La composition de l'invention I2 comprend, outre ce mélange de polymères, à la fois le système de réticulation utilisé dans la composition D2 et l'agent compatibilisant utilisé dans la composition E2, de sorte que seul ce copolymère « SMB 012 » soit réticulé lors du mélangeage.

Tableau 4 :

|  | C2 | D2 | E2 | I2 |
|---|---|---|---|---|
| Copolyamide « Rilsan B » (type PA11) | 104 | 104 | 104 | 104 |
| Polypropylène « MOPLEN 2084HEXP » | 90 | 90 | 90 | 90 |
| Agent compatibilisant « SBM 012 » |  |  | 24 | 24 |
| Peroxyde « DICUP 40 » |  | 2,4 |  | 2,4 |
| Activateur poudre « ALCAN » |  | 1,2 |  | 1,2 |
| Pression à la commutation (Bars) | 600 | 350 | 490 | 410 |
| Valeurs de gonflement des compositions (%) | 6 | 8 | 8 | 4 |
| Allongement rupture (%) | 65 | 20 | 60 | 40 |
| Contrainte seuil (MPa) | 25 | 25 | 24 | 27 |
| Déformation seuil (%) | 17 | 15 | 18 | 18 |
| Module élastique à 0,2 % de déformation (MPa) | 800 | 450 | 800 | 1060 |

On notera que la valeur de gonflement de la composition selon l'invention I2 est inférieure à celle des compositions « témoin » C2, D2 et E2, ce qui témoigne de la réticulation de l'agent compatibilisant « SBM 012 » au sein de la composition I2.

Des mesures de températures de transition Tg ont également été effectuées pour ces compositions, en suivant le même protocole que pour les produits purs. Les résultats figurent dans le tableau 5 ci-après.

Tableau 5 :

| Compositions | Températures de transition vitreuse Tg (° C) |
|---|---|
| C2 | -71 ° C;-51 ° C; +3° C |
| D2 | -71° C;-49° C; +3° C |
| E2 | -69° C;-39° C; +1 ° C |
| I2 | -69° C;-39° C; -1° C |

Les températures de transition Tg sont modifiées par la présence de l'agent compatibilisant, comme le montre le tableau 5 (cf. compositions E2 et I2). La réticulation qui caractérise l'agent compatibilisant dans la composition I2 ne modifie pas l'interpénétration des phases, puisque les températures de transition sont comparables à celles observées pour le mélange « témoin » compatibilisé E2.

Il ressort du tableau 4 que les propriétés de contrainte seuil et d'allongement rupture de la composition I2 selon l'invention sont comparables à ou meilleures que celles de la composition « témoin » de base C2, alors que le module élastique de la composition I2 augmente de façon significative puisqu'il passe de 800 MPa pour la composition C2 à 1060 MPa (soit plus de 32 % d'augmentation).

**III/ Troisième série d'essais :**

On a préparé de la manière précitée trois compositions « témoin » C3, D3, E3 et trois compositions selon l'invention I3, I3' et I3", dont les formulations respectives sont détaillées en parties en poids au tableau 6 ci-après.

La composition C3 comprend un mélange du copolymère de polyoxyméthylène (« Hostaform C13021 », TICONA), à titre de polymère polaire, et de l'homopolymère du propylène « Moplen 2084 HEXP » (BASELL), à titre de polymère apolaire.

La composition D3 comprend en outre le système de réticulation constitué d'une résine formo-phénolique « SP1045 », et la composition E3 est dépourvue de système de réticulation mais comprend en outre un copolymère statistique non réticulé « AT 325 » de type éthylène/acrylate/acide acrylique, à titre d'agent compatibilisant.

Chacune des trois composition selon l'invention I3, I3' et I3" comprend, outre ce mélange de polymères, à la fois le système de réticulation utilisé dans la composition D3 et l'agent compatibilisant utilisé dans la composition E3, de sorte que seul ce copolymère « AT 325» soit réticulé lors du mélangeage.

On notera que les seconde et troisième compositions de l'invention I3' et I3" se différencient uniquement de la composition I3, en ce qu'elles contiennent des quantités de résine de réticulation beaucoup plus réduites.

Tableau 6 :

| | C3 | D3 | E3 | I3 | I3' | I3" |
|---|---|---|---|---|---|---|
| « HOSTAFORM C13021 » | 141 | 141 | 141 | 141 | 141 | 141 |
| « MOPLEN 2084HEXP » | 90 | 90 | 90 | 90 | 90 | 90 |
| Agent « AT 325 » | | | 24 | 24 | 24 | 24 |
| Résine « SP1045 » | | 4,8 | | 4,8 | 1 | 0,5 |
| Pression à la commutation (bars) | 740 | 630 | 1120 | 850 | 980 | 900 |
| Allongement rupture (%) | 12 | 15 | 65 | 29 | 70 | 80 |
| *Ecart-type* | *5* | *10* | *19* | *10* | *15* | *10* |
| Contrainte seuil (MPa) | 32 | 32 | 50 | 35 | 33 | 33 |
| *Ecart-type* | *1* | *0, 7* | *0, 5* | *1* | *0, 5* | *0, 3* |
| Déformation seuil (%) | 4 | 3,4 | 6 | 6 | 9 | 10 |
| *Ecart-type* | *0,1* | *0, 5* | *0, 5* | *0, 2* | *0, 6* | *1,7* |
| Module élastique à 0,2 % de déformation (MPa) | 1200 | 1100 | 1500 | 1100 | 1300 | 1300 |

Il ressort du tableau 6 que les propriétés de contrainte seuil et d'allongement rupture de chacune des compositions I3, I3' et I3" selon l'invention sont meilleures que celles de la composition « témoin » de base C3, alors que le module élastique de chaque composition I3, I3', 13" est analogue ou supérieur à celui de cette composition de base C3.

On notera en outre que les compositions I3' et I3" selon l'invention incorporant des quantités très réduites de résine de réticulation présentent des valeurs d'allongement rupture et de module élastique encore plus nettement améliorées, par rapport à celles de la composition C3.

## IV/ Quatrième série d'essais :

On a préparé de la manière précitée trois compositions « témoin » C4, D4, E4 et une composition selon l'invention I4, dont les formulations respectives sont détaillées en parties en poids au tableau 7.

La composition C4 comprend un mélange d'un polyfluorure de vinylidène (PVDF) « KYNARFLEX 2750 » (ARKEMA) à titre de polymère polaire, et d'un polyéthylène haute densité « LAQTENE X10B » à titre de polymère apolaire.

La composition D4 comprend en outre le système de réticulation au peroxyde « DICUP 40 » comprenant en outre l'activateur sous forme de poudre « ALCAN », et la composition E4 est dépourvue de système de réticulation mais comprend en outre le copolymère triblocs non réticulé « SBM 012 » (ARKEMA), à titre d'agent compatibilisant.

La composition de l'invention I4 comprend, outre ce mélange de polymères, à la fois le système de réticulation utilisé dans la composition D4 et l'agent compatibilisant utilisé dans la composition E4, de sorte que seul ce copolymère « SBM 012 » soit réticulé lors du mélangeage.

Tableau 7 :

|  | C4 | D4 | E4 | I4 |
|---|---|---|---|---|
| PVDF « KYNARFLEX 2750 » | 180 | 180 | 180 | 180 |
| PEHD « LAQTENE X10B » | 96 | 96 | 96 | 96 |
| Agent « SBM 012 » |  |  | 24 | 24 |
| Peroxyde « DIPCUP 40 » |  | 2,4 |  | 2,4 |
| Activateur poudre « ALCAN » |  | 1,2 |  | 1,2 |
| Allongement rupture (%) | 6 | 15 | 12 | 20 |
| *Ecart-type* | *1,6* | *3* | *2,4* | *1,2* |
| Contrainte seuil (MPa) | 17 | 10 | 30 | 26 |
| *Ecart-type* | *0, 5* | *0,1* | *0, 4* | *0, 6* |
| Déformation seuil (%) | 3,3 | 1,6 | 10 | 14 |
| *Ecart-type* | *0,3* | *0,1* | *1* | *1,6* |
| Module élastique à 0,2 % de déformation (MPa) | 550 | 520 | 820 | 700 |
| *Ecart-type* | *40* | *30* | *50* | *40* |

Il ressort du tableau 7 que les propriétés de contrainte seuil et d'allongement rupture de la composition I4 selon l'invention sont nettement meilleures que celles de la composition « témoin » de base C4, alors que le module élastique de cette composition I4 est supérieur à celui de cette composition de base C4.

## Revendications

1. Composition comprenant :

   - au moins deux polymères thermoplastiques incompatibles dont l'un, apolaire, est une polyoléfine et dont l'autre, polaire, est choisi dans le groupe constitué par les polyacétates de vinyle, les polyacryliques, les homopolymères et copolymères d'esters de type aliphatique, les homopolymères et copolymères d'amides de type aliphatique, les polyoxyméthylènes, les polymères fluorés, les polycarbonates, les polyimides, les polyétherimides et les polyéthers blocs amide, et
   - au moins un agent compatibilisant polymérique qui comporte au moins deux groupes d'unités polaires et apolaires respectivement compatibles avec lesdits polymères,

EP 1 749 851 B1

**caractérisée en ce qu'**elle comprend le produit de la réaction de mélangeage à chaud, en présence d'un système de réticulation choisi dans le groupe constitué par ceux comprenant un peroxyde organique, une résine phénolique, un oxyde métallique et une diamine, desdits polymères thermoplastiques et dudit agent compatibilisant à l'état réticulable, lequel est présent dans la composition selon une fraction massique comprise entre 1 % et 25 % et est choisi dans le groupe constitué par les terpolymères linéaires à trois blocs polystyrène / polybutadiène-1,4 / polyméthacrylate de méthyle et les terpolymères statistiques comprenant des unités issues de l'éthylène, d'un acrylate et d'acide acrylique, de telle sorte que seul ledit agent compatibilisant soit réticulé dans ladite composition en formant une interphase entre ces deux polymères thermoplastiques.

**2.** Composition selon la revendication 1, **caractérisée en ce que** ledit système de réticulation comprend au moins un peroxyde organique, un activateur et, optionnellement, du soufre.

**3.** Composition selon la revendication 2, **caractérisée en ce que** ledit activateur est choisi dans le groupe constitué par les diacrylates, les diméthacrylates, les triméthacrylates, le triallyl cyanurate, le triallyl isocyanurate et la N, N' phénylène dimaléimide.

**4.** Composition selon une des revendications précédentes, **caractérisée en ce que** :

- ledit polymère polaire est choisi dans le groupe constitué par les homopolymères ou copolymères d'un amide aliphatique, les polyoxyméthylènes et les polyfluorures de vinylidène, et **en ce que**
- ledit polymère apolaire est un polyéthylène à haute densité ou un polypropylène.

**5.** Composition selon une des revendications précédentes, **caractérisée en ce qu'**elle comprend :

- ledit polymère thermoplastique polaire selon une fraction massique comprise entre 1 % et 90 %,
- ledit polymère thermoplastique apolaire selon une fraction massique comprise entre 90 % et 1 %, et
- ledit système de réticulation selon une fraction massique comprise entre 0,01 % et 5 %.

**6.** Composition selon la revendication 5, **caractérisée en ce qu'**elle comprend :

- ledit polymère thermoplastique polaire selon une fraction massique comprise entre 40 % et 60 %, et
- ledit polymère thermoplastique apolaire selon une fraction massique comprise entre 50 % et 30 %.

**7.** Composition selon une des revendications précédentes, **caractérisée en ce qu'**elle comprend ledit agent compatibilisant selon une fraction massique comprise entre 5 % et 15 %.

**8.** Procédé de préparation d'une composition selon une des revendications précédentes, **caractérisé en ce qu'**il comprend un malaxage thermomécanique, en présence d'un système de réticulation choisi dans le groupe constitué par ceux comprenant un peroxyde organique, une résine phénolique, un oxyde métallique et une diamine, dudit agent compatibilisant à l'état réticulable et de chacun desdits polymères thermoplastiques, de manière à réticuler seulement ledit agent compatibilisant au sein de ladite composition.

**9.** Procédé de préparation selon la revendication 8, **caractérisé en ce que** l'on met en oeuvre ledit mélangeage dans un mélangeur à double vis avec une température de filière comprise entre 200° C et 220° C.

**10.** Utilisation d'une composition selon une des revendications 1 à 7 pour la fabrication d'articles ou de semi-finis thermoplastiques présentant des propriétés mécaniques améliorées, lesquelles comprennent l'allongement à la rupture, la contrainte au seuil d'écoulement et le module élastique.

**Claims**

**1.** A composition comprising:

- at least two incompatible thermoplastic polymers, one of which is apolar and is a polyolefin and the other one of which is polar and is selected from the group consisting of polyvinyl acetates, polyacrylics, aliphatic-type ester homopolymers and copolymers, aliphatic-type amide homopolymers and copolymers, polyoxymethylenes, fluoropolymers, polycarbonates, polyimides, polyether imides and polyether-block-amide copolymers, and

11

- at least one polymeric compatibilizer that includes at least two groups of polar and apolar units compatible with said polymers respectively, **characterized in that** it comprises the product of a hot compounding reaction, in the presence of a crosslinking system selected from the group consisting of systems comprising an organic peroxide, a phenolic resin, a metal oxide and a diamine, of said thermoplastic polymers and of said compatibilizer in the crosslinkable state, which is present in the composition with a mass fraction of between 1% and 25% and is selected from the group consisting of linear polystyrene/1,4-polybutadiene/polymethyl methacrylate triblock terpolymers and random terpolymers comprising units deriving from ethylene, an acrylate and acrylic acid, in such a way that only said compatibilizer is crosslinked in said composition while forming an interphase between these two thermoplastic polymers.

2. Composition according to Claim 1, **characterized in that** said crosslinking system comprises at least an organic peroxide, an activator and, optionally, sulphur.

3. Composition according to Claim 2, **characterized in that** said activator is selected from the group consisting of diacrylates, dimethacrylates, trimethacrylates, triallyl cyanurate, triallyl isocyanurate and N,N'-phenylenedimaleimide.

4. Composition according to one of the preceding claims, **characterized in that**:

   - said polar polymer is selected from the group consisting of homopolymers and copolymers of an aliphatic amide, polyoxymethylenes and polyvinylidene fluorides; and **in that**:
   - said apolar polymer is a high-density polyethylene or a polypropylene.

5. Composition according to one of the preceding claims, **characterized in that** it comprises:

   - said polar thermoplastic polymer with a mass fraction of between 1% and 90%;
   - said apolar thermoplastic polymer with a mass fraction of between 90% and 1%; and
   - said crosslinking system with a mass fraction of between 0.01% and 5%.

6. Composition according to Claim 5, **characterized in that** it comprises:

   - said polar thermoplastic polymer with a mass fraction of between 40% and 60%; and
   - said apolar thermoplastic polymer with a mass fraction of between 50% and 30%.

7. Composition according to one of the preceding claims, **characterized in that** it includes said compatibilizer with a mass fraction of between 5% and 15%.

8. Method of preparing a composition according to one of the preceding claims, **characterized in that** it comprises a thermomechanically mixing, in the presence of a crosslinking system selected from the group consisting of systems comprising an organic peroxide, systems comprising a phenolic resin, systems comprising a metal oxide and systems comprising a diamine, said compatibilizer in the crosslinkable state with each of said thermoplastic polymers, so as to crosslink only said compatibilizer within said composition.

9. Method of preparation according to Claim 8, **characterized in that** said compounding operation is carried out in a twin-screw compounder with a die temperature of between 200°C and 220°C.

10. Use of a composition according to one of Claims 1 to 7 for the manufacture of thermoplastic articles or semi-finished products having improved mechanical properties, which include the elongation at break, the yield strength and the elastic modulus.

**Patentansprüche**

1. Zusammensetzung, umfassend:

   - wenigstens zwei inkompatible thermoplastische Polymere, von denen das eine apolar und ein Polyolefin ist und das andere polar ist und ausgewählt ist aus der Gruppe bestehend aus Polyvinylacetaten, Acrylpolymeren, Homopolymeren und Copolymeren von aliphatischen Estern, Homopolymeren und Copolymeren von aliphatischen Amiden, Polyoxymethylenen, Fluorpolymeren, Polycarbonaten, Polyimiden, Polyetherimiden und Polyetherblockamiden, und
- wenigstens ein polymeres Kompatibilisierungsmittel, das wenigstens zwei Gruppen polarer und apolarer Einheiten umfasst, die jeweils mit den Polymeren kompatibel sind,

**dadurch gekennzeichnet, dass** sie das Produkt einer Warmcompoundierungsreaktion des Kompatibilisierungsmittels in vernetzbarem Zustand, das in der Zusammensetzung in einem Massenanteil zwischen 1 % und 25% vorliegt und ausgewählt ist aus der Gruppe bestehend aus linearen Polystyrol/1,4-Polybutadien/Polymethylmethacrylat-Triblock-Terpolmeren und statistischen Terpolymeren, die Einheiten umfassen, die sich von Ethylen, einem Acrylat und Acrylsäure ableiten, mit den thermoplastischen Polymeren in Gegenwart eines Vernetzungssystems umfasst, das ausgewählt ist aus der Gruppe bestehend aus solchen, die ein organisches Peroxid, ein Phenolharz, ein Metalloxid und ein Diamin umfassen, in solcher Weise, dass nur das Kompatibilisierungsmittel in der Zusammensetzung vernetzt wird und eine Interphase zwischen den beiden thermoplastischen Polymeren bildet.

2. Zusammensetzung nach Anspruch 1, **dadurch gekennzeichnet, dass** das Vernetzungssystem wenigstens ein organisches Peroxid, einen Aktivator und gegebenenfalls Schwefel umfasst.

3. Zusammensetzung nach Anspruch 2, **dadurch gekennzeichnet, dass** der Aktivator ausgewählt ist aus der Gruppe bestehend aus Diacrylaten, Dimethacrylaten, Trimethacrylaten, Triallylcyanurat, Triallylisocyanurat und N,N'-Phenylendimaleimid.

4. Zusammensetzung nach einem der vorhergehenden Ansprüche, **dadurch gekennzeichnet, dass**:

   - das polare Polymer ausgewählt ist aus der Gruppe bestehend aus Homopolymeren oder Copolymeren eines aliphatischen Amids, Polyoxymethylenen, Polyvinylidenfluoriden, und dadurch, dass
   - das apolare Polymer ein Polyethylen hoher Dichte oder ein Polypropylen ist.

5. Zusammensetzung nach einem der vorhergehenden Ansprüche, **dadurch gekennzeichnet, dass** sie umfasst:

   - das polare thermoplastische Polymer in einem Massenanteil zwischen 1 % und 90%,
   - das apolare thermoplastische Polymer in einem Massenanteil zwischen 90%
   und 1%, und
   - das Vernetzungssystem in einem Massenanteil zwischen 0,01% und 5%.

6. Zusammensetzung nach Anspruch 5, **dadurch gekennzeichnet, dass** sie umfasst:

   - das polare thermoplastische Polymer in einem Massenanteil zwischen 40%
   und 60%, und
   - das apolare thermoplastische Polymer in einem Massenanteil zwischen 50% und 30%.

7. Zusammensetzung nach einem der vorhergehenden Ansprüche, **dadurch gekennzeichnet, dass** sie das Kompatibilisierungsmittel in einem Massenanteil zwischen 5% und 15% umfasst.

8. Verfahren zur Herstellung einer Zusammensetzung nach einem der vorhergehenden Ansprüche, **dadurch gekennzeichnet, dass** es ein thermomechanisches Mischen des Kompatibilisierungsmittels in vernetzbarem Zustand mit jedem der thermoplastischen Polymere in Gegenwart eines Vernetzungssystems umfasst, das ausgewählt ist aus der Gruppe bestehend aus solchen, die ein organisches Peroxid, ein Phenolharz, ein Metalloxid und ein Diamin umfassen, in solcher Weise, dass nur das Kompatibilisierungsmittel in der Zusammensetzung vernetzt wird.

9. Herstellungsverfahren nach Anspruch 8, **dadurch gekennzeichnet, dass** die Compoundierung in einem Doppelschneckenmischer mit einer Schneckentemperatur zwischen 200°C und 220°C durchgeführt wird.

10. Verwendung einer Zusammensetzung nach einem der Ansprüche 1 bis 7 zur Herstellung von thermoplastischen Artikeln oder Halbfertigprodukten mit verbesserten mechanischen Eigenschaften, welche Bruchdehnung, Streckgrenze und Elastizitätsmodul umfassen.

**Fig. unique**

14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6887940 B
- EP 493811 A
- FR 2849855 A
- FR 2820138 A

**Littérature non-brevet citée dans la description**

- **KRAUSE S.M.** Compatible Polymers in Polymer Handbook. Wiley, 1989
- **AJJI A. ; UTRACKI L. A.** *Polym. Eng. Sci.,* 1996, vol. 36, 1574